(19) Europäisches Patentamt
European Patent Office
Office européen des brevets

(11) **EP 1 852 323 B1**

(12) **EUROPEAN PATENT SPECIFICATION**

(45) Date of publication and mention
of the grant of the patent:
**10.08.2016 Bulletin 2016/32**

(51) Int Cl.:
***B60T 7/22*** *(2006.01)*

(21) Application number: **06113489.6**

(22) Date of filing: **04.05.2006**

(54) **Rear end collision mitigation system for an automotive vehicle**

System zür Abschwächung eines Fahrzeugauffahrunfalls

Système de mitigation de collisions arrières pour un véhicule automobile

(84) Designated Contracting States:
**DE GB SE**

(43) Date of publication of application:
**07.11.2007 Bulletin 2007/45**

(73) Proprietor: **Volvo Car Corporation**
**405 31 Göteborg (SE)**

(72) Inventors:
• **Brännström, Mattias**
**417 58 Göteborg (SE)**
• **Levin, Daniel**
**431 39 Mölndal (SE)**
• **Grante, Christian**
**426 68 Västra Frölunda (SE)**

• **Birk, Wolfgang**
**954 35 Gammelstad (SE)**
• **Jansson, Jonas**
**589 35 Linköping (SE)**
• **Hultén, Johan**
**413 16, Göteborg (SE)**

(74) Representative: **Valea AB**
**Box 1098**
**405 23 Göteborg (SE)**

(56) References cited:
WO-A-87/02812        WO-A-2004/005962
WO-A-2004/080771     DE-A1- 3 138 377
US-A- 3 732 536      US-B1- 6 364 433
US-B1- 6 624 747

## Description

TECHNICAL FIELD

The present invention is related to a system for autonomous rear impact mitigation in a vehicle hosting the system, the vehicle having a brake system and a steering system in accordance with the preamble of claim 1. Furthermore, the present invention relates to a method for autonomous rear impact mitigation in a host vehicle having a brake system and a steering system in accordance with the preamble of claim 9.

BACKGROUND OF THE INVENTION

Rear end collisions between automotive vehicles often result in personal injuries. Upon a rear end impact, the occupants of the vehicle that is being rear ended are very suddenly pushed forward, often causing so called whiplash injuries. Even worse, rear end collisions frequently cause second collisions with other vehicles in so called domino-effect chain reactions or with oncoming/crossing traffic. These second collisions, in turn, may cause new injuries or cause the injuries from the first collisions to become more severe, this since the bodies of the vehicles occupants suddenly are subjected to repeated accelerations in different directions and since the post crash mitigations systems, such as airbags, tightening seat belts, etc., may already have been utilized and are of no or limited protection during secondary impacts. Furthermore, the second collision often results in personal injuries for the occupants of the additional vehicle being involved in the multiple collision.

US 6 364 433 describes a safety brake system for a motor vehicle which continuously monitors for a rear impact collision. If a rear impact is classified as one requiring responsive intervention, the system applies a braking force to the wheels of the motor vehicle. In this case, however, in-vehicle acceleration and crunch zone sensors are used to determine that a rear impact collision has occurred and thereafter braking action of the vehicle is triggered.

Accordingly, the vehicle must suffer a rear impact collision before the system according to US 6 364 433 initiates classification of the impact and application of braking force.

SUMMARY OF THE INVENTION

An object of the present invention is to provide an improved system for autonomous rear impact mitigation in a vehicle hosting the system, the vehicle having a brake system and a steering system. The main purpose of the system is to significantly decrease the risk of the host vehicle being involved in a second collision, where the host vehicle is rear ended by another vehicle in a first collision. In situations where a second collision occurs, the system is aimed to significantly decrease the velocity of the host vehicle before the second collision. It shall be noted that the system is not aimed at reducing the risk of being involved in the first collision or to reduce the relative speed between the colliding vehicles in the first collision. Furthermore, the system is also aimed at reducing the risk of personal injury in the first collision if the vehicle hosting the system is stationary at the time of impact, which is the case in 60-70% of all rear end collisions.

According to a first aspect of the present invention this object is achieved in accordance with the characterizing portion of claim 1, which specifies that the system comprises means for establishing relative motion parameters between the host vehicle and a second vehicle behind the host vehicle, and means for selectively activating the brake system of the host vehicle, while the host vehicle has a positive velocity, based on the determined relative motion parameters.

A further object of the present invention is to provide an improved method for autonomous rear impact mitigation in a host vehicle having a brake system and a steering system.

According to a second aspect of the present invention this object is achieved in accordance with the characterizing portion of claim 9, which specifies that the method comprises the steps of: establishing relative motion parameters between the host vehicle and a second vehicle behind the host vehicle, and selectively activating the brake system of the host vehicle, while the host vehicle has a positive velocity, based on the determined relative motion parameters.

Further embodiments are listed in the dependent claims.

It will be appreciated that features of the invention are susceptible to being combined in any combination without departing from the scope of the invention as defined by the accompany claims.

BRIEF DESCRIPTION OF THE DRAWINGS

By way of example only, embodiments of the present invention will now be described with reference to the accompanying drawings wherein:

Figure 1 is a schematic illustration of a first embodiment of the system for autonomous rear impact mitigation in accordance with present invention; and

Figure 2 is a schematic illustration of a comparison of the distance that a host vehicle will travel after the first rear end collision before coming to a complete stop according to the prior art and using different embodiments of the system for autonomous rear impact mitigation in accordance with present invention; and

Figure 3 is a schematic illustration of a second embodiment of the system for autonomous rear impact mitigation in accordance with present invention; and

Figure 4 is a flowchart illustrating a method for autonomous rear impact mitigation in a host vehicle in accordance with the present invention; and

Figure 5 is a schematic illustration of relative motion parameters between the host vehicle and a second vehicle behind the host vehicle in accordance with the present invention; and

Figure 6 is a schematic illustration of relative motion parameters between a vehicle in front of the host vehicle and the host vehicle in accordance with the present invention.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein. The same reference numerals will be used for illustrating corresponding features in the different drawings.

DETAILED DESCRIPTION OF PREFERRED EMBODIMENTS

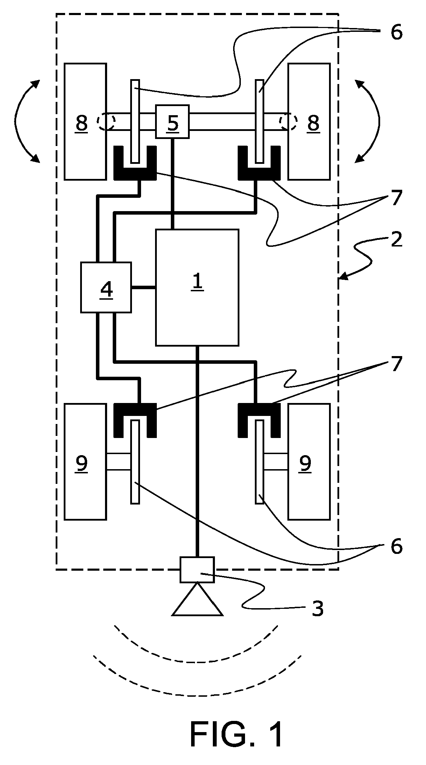

In a preferred first embodiment of the present invention, as shown schematically in FIG. 1, a system for autonomous rear impact mitigation 1 is arranged in a host vehicle 2. The host vehicle 2 has a brake system 4 such as an ABS system, e.g. with brake discs 6 and appertaining callipers 7 associated with each of the front wheels 8 and rear wheels 9. The vehicle 2 further has a steering system 5. A sensor 3 is mounted at the rear end of the host vehicle 2 and arranged to monitor the region behind the host vehicle 2 for other vehicles/objects. The system 1 is operatively connected with the braking system 4 of the host vehicle 2.

The system 1 for autonomous rear impact mitigation in a vehicle 2 hosting the system 1, as mentioned above, comprises means 3 for establishing relative motion parameters between the host vehicle 2 and a second vehicle 11 behind the host vehicle 2, such as relative distance, relative angle, relative velocity or relative acceleration. These means for establishing relative motion parameters may comprise at least one of a RADAR system (Radio Detection and Ranging), a LIDAR system (Light Detection and Ranging; or Laser Imaging Detection and Ranging), a ultra sound sensor system or a camera based system arranged to monitor the region behind the host vehicle 2 or a system for wireless communication with the second vehicle/object 11 (and/or any other object in the traffic environment), such as e.g. a system for telemetry, or a positioning system such as a GPS system (Global Positioning System).

The main purpose of the sensor 3 is to provide measurements needed to determine when a rear impact between the second vehicle and the host vehicle is imminent. Thus, it should normally be enough for the sensor 3 to measure at distances up to about 25 meters at high frequency (e.g. 100 Hz). The relative motion parameters can be used in combination with estimates of the size (e.g width) of both vehicles for improved performance when determining if an impact is imminent. The width of the second vehicle may be set to a predefined value if it is unknown or be estimated in several ways, e.g. with the sensor 3. The possible means 3 for determining if an impact is imminent are sufficiently known to those of skill in the automotive art and they will, therefore, not be described in more detail herein.

The system 1 further comprises means, such as an onboard microcomputer, for selectively activating the brake system 4 of the host vehicle 2, while the host vehicle 2 has a positive velocity (i.e. is stationary or moving forward), based on the determined relative motion parameters . The activation may be arranged to apply anything between zero and full brake force for each wheel independently if a rear impact is imminent and the host vehicle 2 is stationary or moving forward with a velocity below a certain threshold, e.g. below 1-2 km/h.

Furthermore, means for preparing for activation the brake system 4 may be arranged to slightly apply/precharge the brakes when rear impact is imminent, e.g. in the case of an electric brake system 4, such that full braking is achieved with minimal time delay once a rear impact is detected. The actual impact can be detected in several ways, e.g. by the sensor system 3 or by internal impact sensors in the host vehicle.

These means for detecting the occurrence of a rear impact may be integral to the means for establishing relative motion parameters between the host vehicle 2 and a second vehicle 11 behind the host vehicle alternatively it is also possible to use crash sensors, such as accelerometers, possibly already part of a passenger protection system of the host vehicle 2, and/or crunch zone sensors or a combination of such sensors.

Means for evaluating the severity of the imminent rear impact and the detected rear impact may also be present in the system 1. These means may be implemented using the same onboard microcomputer as described previously.

The brake system 4 may also be a hybrid between a hydraulic and an electrical brake system, whereby preparation for rapid activation may be performed in a manner suited for the specific brake system 4. The possible types of brake systems 4 are sufficiently known to those of skill in the automotive art and they will, therefore, not be described in more detail herein.

The brake systems in standard cars produced today usually have a time delay of 100-200 ms before the brake pressure starts to build up. The pressure is then built up corresponding to a retardation of the vehicle with 10-15 m/s$^3$. This means that it takes 700-1200 ms to reach a brake pressure corresponding to a full retardation (approximately 10 m/s$^2$) on a high $\mu$ (mu) surface once braking is initiated. In accordance with the invention significant savings in this time are made by activating the brake system, or preparing it for activation, before the first impact occurs. These savings are very valuable for avoiding a secondary collision with oncoming traffic, crossing traffic and any vehicles, obstacles, pedestrians etc in front of the host vehicle 2, or for reducing the impact energy of such a second collision if it is not avoidable.

Furthermore, the deformation zones of the host vehicle 2 may be better utilized if the host vehicle 2 is stationary when the rear impact is imminent and the brakes 7 are fully applied before the collision occurs. This since some of the impact energy may be transferred into the ground through the wheels 8, 9 of the host vehicle 2 instead of only accelerating the host vehicle 2. I.e. the sudden acceleration of the occupants in the host vehicle 2 at the time of impact is reduced and thus, the risk of personal injury, e.g. whiplash injury, is reduced. In 60-70% of all rear end collisions, the vehicle that is rear ended is stationary at the time of impact.

In 50% of all rear end collisions, the vehicle that is rear ended has been stationary for at least one second before impact. In all these cases, the system 1 may activate the brakes 7 of the host vehicle 2 when a rear impact is imminent (e.g. one second before impact) and thus achieve full brake pressure in the host vehicle 2 before the actual impact occurs. Since full brake pressure is achieved before the impact occurs, the distance required to bring the host vehicle 2 to stop is significantly decreased. The mechanism for deciding when a rear impact is imminent may be dynamic and utilize knowledge of the established relative motion parameters and knowledge of the response time of the brake system 4 in order to determine when to activate the brakes of the host vehicle 2.

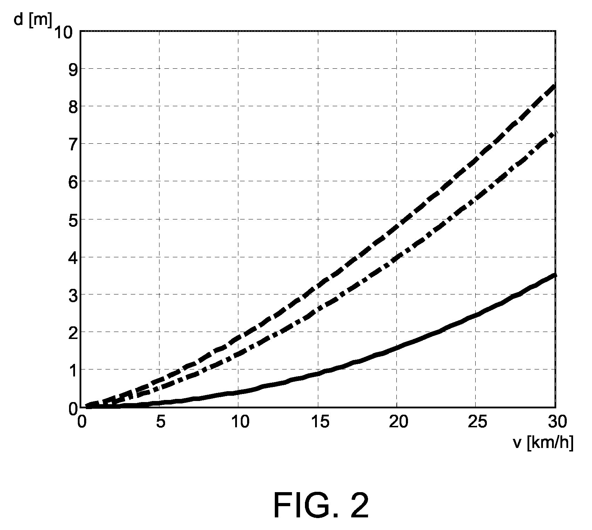

FIG. 2 shows the distance that a host vehicle 2 will travel after the first rear end collision before coming to a complete stop on a high $\mu$ (mu) surface for the system 1 for autonomous rear impact mitigation in a vehicle according to the present invention. It is assumed that the host vehicle is equipped with a standard brake system 4 and it is assumed that the rear vehicle 11 is braking before the actual impact. Usually, the inventive system 1 will achieve full brake pressure or almost full brake pressure before impact in cases where the host vehicle 2 is stationary at the time of impact. Preparation for brake activation is usually achieved in cases where the host vehicle is moving forward in a velocity higher than e.g. 1-2 km/h when the impact occurs. The speed v shown on the x-axis is the host vehicle 2 speed in km/h directly after the first collision. FIG. 2 also shows a comparison between the system 1 described in this invention and the system described in the prior art document US 6 364 433, where the brakes are activated upon the actual rear end impact. The distance d in meters that the host vehicle 2 will travel after the first rear end collision before coming to a complete stop is indicated on the vertical y-axis of FIG. 2 while the host vehicle 2 speed v in km/h directly after the impact is illustrated on the horizontal x-axis. The uppermost dashed line illustrates the case of activating the brakes at impact in accordance with the prior art system described in US 6 364 433. The middle dashed/dotted line illustrates the effect of preparing the brakes before impact (e.g. pre-charging) and the lowermost full line illustrates the effect of activating the brakes of the host vehicle before impact.

It is clear from FIG.2 that the distance travelled from the rear end impact to a complete stop is reduced considerably using the system 1 in accordance with the present invention, especially if the brakes 7 are activated before the impact in accordance with the lowermost full line of FIG: 2. This means that the risk of the host vehicle 2 being involved in a second collision is reduced substantially.

The system 1 may be provided with means for enabling the driver to override the activation of the brake system 4 of the host vehicle 2 by e.g. pressing down the throttle more than a given threshold. If the driver overrides the brake activation, the brake request from the system is immediately temporary disabled. Furthermore, in addition to throttle position it is possible to provide this override functionality based on brake-pedal position, button press, occupant position, steering angle, steering velocity, steering torque or in any other suitable way.

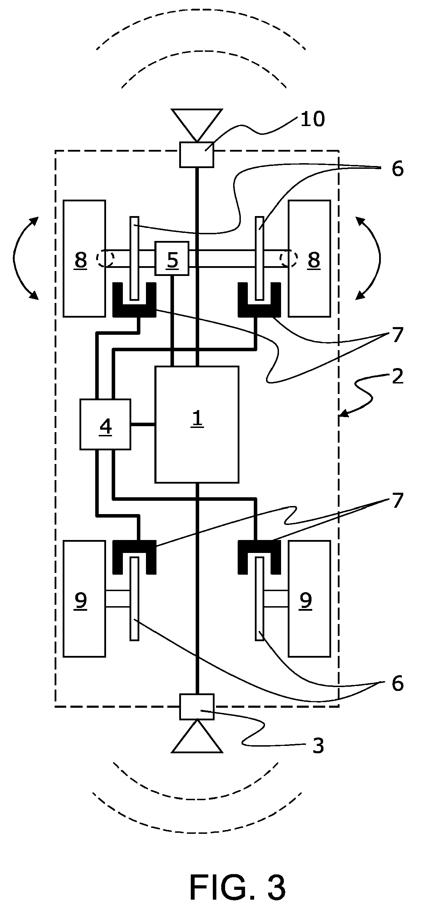

As shown schematically in FIG. 3, in a second embodiment of the present invention a system 1 for autonomous rear impact mitigation 1 is arranged in a host vehicle 2 in the same way as in the first embodiment. This embodiment is especially suited to mitigate or avoid multiple collisions with other vehicles (or objects) in front of the host vehicle 2. The host vehicle 2 has a braking system 4 such as an ABS system, e.g. with brake discs 6 and appertaining callipers 7 associated with each of the front wheels 8 and rear wheels 9. The host vehicle 2 further has a power steering system 5, which is arranged to control the steering angle of the front wheels 8. This may be done through influencing one or more of the following parameters of the steering system: steering angle; steering torque; steering angle-velocity and yaw rate. A sensor 3 is mounted at the rear end of the host vehicle 2 and arranged to monitor the region behind the host vehicle 2. The system 1 is operatively connected with the braking system 4 and/or the power steering system 5 of the host vehicle 2. Further, the system 1 is arranged to establish relative motion parameters between a third vehicle/object/lane markings/road signs 12 in front of the host vehicle 2 and the host vehicle 2. For this purpose an additional sensor 10 is mounted at the front end of the host vehicle 2 and arranged to monitor the region in front of the host vehicle 2.

In addition to all features described with relation to the first embodiment, the second embodiment as mentioned above further comprises means 10 for establishing relative motion parameters between objects 12, such as vehicles/objects/lane markings/road signs, in front of the host vehicle 2 and the host vehicle 2. These means 10 comprises at least one of a RADAR system, a LIDAR system, an ultrasound sensor system, a camera based system arranged to monitor the region in front of the host vehicle 2, or a system for wireless communication with the second vehicle/object (and/or any other object in the traffic environment), such as e.g. a system for telemetry, or a positioning system such as a GPS system (Global Positioning System). The possible means 3, 10 for establishing relative motion parameters are sufficiently known to those of skill in the automotive art and they will, therefore, not be described in more detail herein.

Should both vehicles of the first and/or second embodiments be provided with the inventive system 1 as well as systems for wireless communication with the other vehicle, relative motion parameters may be communicated this way and, furthermore, means may be provided for coordinating collision mitigation through providing for mitigation manoeuvres involving the host vehicle 2, the second 11 or third 12 vehicle or any combination of vehicles in a combined manoeuvre.

The system 1 in accordance with this second embodiment further comprises means for processing the established relative motion parameters, which means may be implemented using the same onboard microcomputer as previously described.

Further comprised are means for determining from any determined relative motion parameters if an impact between the host vehicle 2 and any object is imminent as a result of a rear impact between the second vehicle and the host vehicle 2 which has been determined imminent. The momentum is constant before and after the rear impact according to the law of physics. Thus, estimations of the host vehicle velocity directly after the rear impact can be made before the rear impact occurs if the mass of both the colliding vehicles are known and estimates of the relative motion parameters between the host vehicle and the second vehicle are available. The estimated mass of the second vehicle may either be set to a predefined value or be estimated through estimates of the size of the second vehicle (e.g using the sensor 3). Knowing the expected host vehicle velocity directly after the rear end impact and the relative motion parameters between the host vehicle and the object in front of the host vehicle, it can be determined, before the first rear impact has occurred, if an impact between the host vehicle 2 and the object is imminent. The size of the object may be set to a predefined value if it is unknown or be estimated in several ways, e.g. with the sensor 3. Also these means may be implemented using the same onboard microcomputer as previously described. An object may also include vehicles, lane markings, road signs, pedestrians, animals, etc. Note that vehicles also may include oncoming and crossing traffic.

In this second embodiment is provided means for selectively executing a manoeuvre for mitigating an impact with any object 12 by performing at least one of a steering counteraction and a braking counteraction, if determined that an impact between the host vehicle 2 and the object 12 is imminent. A steering counteraction may be performed using the steering system 5 of the host vehicle 2, if the imminent rear impact is determined as likely to cause a second impact with at least one object 12 using a current steering angle.

Means may be provided for selectively changing at least one parameter of the steering system 5 of the host vehicle 2 if a rear impact between the second vehicle 11 and the host vehicle 2 is determined imminent and the positive velocity of the host vehicle 2 is below a predetermined threshold, e.g. 1-2 km/h.

Additional sensors (not shown), directed outwards from each side of the host vehicle 2 may be used to establish the presence and relative motion between crossing traffic and the host vehicle 2.

Furthermore, the system 1 may also comprise means for detecting the occurrence of a rear impact between the second vehicle 11 and the host vehicle 2, means for evaluating the detected rear impact, and means for selectively performing at least one of a steering counteraction and a braking counteraction based on the evaluation of the detected rear impact. These means may be implemented using the same microcomputer as described previously.

The system 1 may also comprise means for estimating the relative motion parameters between the host vehicle 2 and a second vehicle 11 after a first impact, before that first impact has occurred. This may be performed by using measurements of relative motion parameters of the host vehicle 2 and of the second vehicle 11, such as the relative distance and the relative angle between the host vehicle 2 and the second vehicle 11. Using the estimated value of one or several relative motion parameters after the first impact, it can be determined if the imminent rear impact is likely to cause an imminent second collision, involving the host vehicle 2.

Finally, the system 1 may also comprise means for selectively executing an impact mitigating manoeuvre based on the evaluation of the imminent rear impact and/or the relative motion parameters between the host vehicle 2 and the second vehicle 11 at the time of impact. These means for selectively executing an impact mitigating manoeuvre may be implemented using the same microcomputer as described previously and may be arranged to apply at least one brake of the brake system 4 of the host vehicle 2 if the detected rear impact is evaluated as requiring mitigation. In a preferred embodiment, the at least one brake of the brake system 4 of the host vehicle 2 is arranged to maintain brake application after the host vehicle 2 has come to a full stop following a rear impact.

Thus, if the brakes of the host vehicle 2 are fully applied before the rear impact occurs, and are maintained fully applied even after the host vehicle 2 has come to a stop, many multiple collisions with other vehicles 12, obstacles and pedestrians in front of the host vehicle 2 can be avoided or at least mitigated through the impact force of any secondary collision being reduced. Furthermore, through application of a steering counteraction, the steering wheels 8 of the host vehicle 2 may be set in a suitable direction for the current traffic situation, based on the evaluation of obstacles 12. Hereby the host vehicle 2 is made less likely to become involved in a multiple crash with obstacles 12 in front of it. It is often suitable to steer the host vehicle 2 back into the lane in which it was driven before the collision, this as this lane may be regarded as a safe zone if there are no immediate threatening obstacles 12 in the lane. This reduces the risk collision with oncoming traffic and of tripped rollover, i.e. when a large steering angle of the host vehicle 2 at the time of the first impact can cause the host vehicle 2 to roll over.

In accordance with the present invention is also envisaged an automotive vehicle 2, which comprises a system for autonomous rear impact mitigation in a vehicle hosting the system as described above.

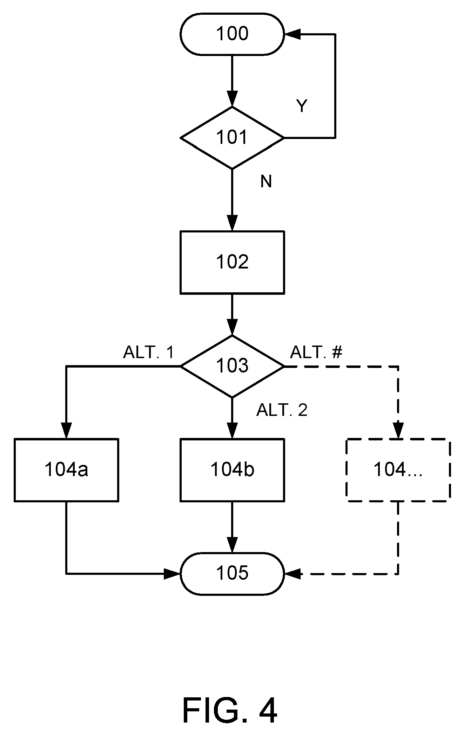

FIG. 4 shows a flowchart illustrating a method for autonomous rear impact mitigation in a host vehicle 2 in accordance with the present invention.

The method for autonomous rear impact mitigation in a host vehicle 2 having a brake system 4 and a steering system 5 starts at step 100. In step 101, it is determined if the driver overrides the system by pressing down the throttle more than a certain threshold or by turning the steering wheel faster than a certain threshold, or similar. If the driver does not override the system, in step 102 are established relative motion parameters between the host vehicle 2 and a second vehicle behind the host vehicle 2. In step 103 the brake system 4 of the host vehicle 2 is selectively activated, while the host vehicle 2 has a positive velocity, based on the determined relative motion parameters.

E.g. if it is determined that the host vehicle 2 is driving straight forward and is either stationary or is moving forward with a velocity below a certain threshold, e.g. 1-2 km/h, a full brake activation impact mitigation manoeuvre is selected and executed in step 104a, As illustrated in FIG. 4 one of several alternatives may be executed. Although FIG. 4 illustrate a limited number of alternatives it will be obvious to a person skilled in the art that any number of alternatives may be contemplated. One of the alternatives may also be to not execute any countermeasure. Other alternatives include the addition of steering countermeasures in accordance with the second embodiment system described above. Steps 100-103 are continuously re-evaluated and another impact mitigation manoeuvre may be selected in step 103, driver override may be detected, etc. Step 105 terminates the method. As mentioned above is understood, however, that the processing cycles back from step 105 to the start of step 100 while the host vehicle 2 is in operation, e.g. while the ignition of the host vehicle 2 is active.

The alternatives, ALT. 1, ALT. 2, ALT. # and so on, are necessary because in some cases, for example when the impact force is small and the speed of the host vehicle 2 is high, an alternative of no rear impact mitigation manoeuvre should be selected, as any countermeasure, such as e.g. braking or steering, in this case could increase the risk of putting the host vehicle 2 into a spin. The same situation could occur at lower speed if the road friction is low, e.g. due to ice. Furthermore, in accordance with the invention it is as described above preferably possible for a driver of the host vehicle 2 to override the impact mitigating countermeasures by pushing down an accelerator pedal (i.e. the throttle) or applying a sufficient amount of steering torque. Furthermore, if the host vehicle 2 is travelling at a high speed, the brakes should only be applied upon detection of a rear impact that exceeds a given force. It shall be noted that the impact mitigation manoeuvre can last from one or several seconds before the first impact to several minutes after the first impact, e.g. the brakes may be fully activated one second before the first impact and kept fully applied before, during and after the first impact, even after the host vehicle 2 has come to a full stop.

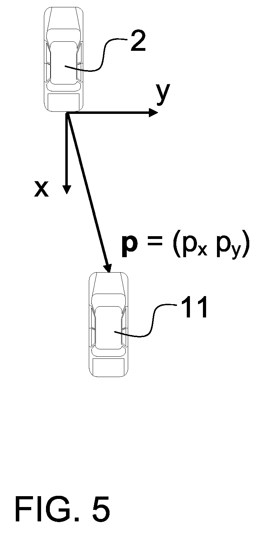

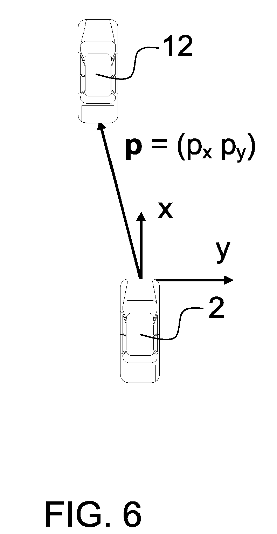

FIG. 5 illustrates relative motion parameters between the host vehicle 2 and a second vehicle 11 behind the host vehicle 2 and FIG. 6 illustrates relative motion parameters between a third vehicle 12 in front of the host vehicle 2 and the host vehicle 2. All relative motion parameters may easily be described by $p_x$ and pyand the derivatives thereof. E.g.:

$$\text{Relative distance} = \text{range} = r = \text{abs}(p)$$

$$\text{Relative velocity} = \text{range rate} = dr/dt$$

$$\text{Relative angle} = \text{alpha} = \arctan(p_y/p_x)$$

$$\text{Relative angle velocity} = d\ \text{alpha}/dt$$

Modifications to embodiments of the invention described in the foregoing are possible without departing from the scope of the invention as defined by the accompanying claims.

Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural and vice versa.

Numerals included within parentheses in the accompanying claims are intended to assist understanding of the claims and should not be construed in any way to limit subject matter claimed by these claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

**Claims**

1. A system (1) for autonomous rear impact mitigation in a vehicle (2) hosting the system (1), the vehicle (2) having a brake system (4) and a steering system (5), **characterised in that** it comprises:

   means for establishing relative motion parameters between the host vehicle (2) and a second vehicle (11) behind the host vehicle (2);
   means for selectively activating the brake system (4) of the host vehicle (2), while the host vehicle (2) has a positive velocity, based on the determined relative motion parameters, and means for using the relative motion parameters for determining if a rear impact between the second vehicle (11) and the host vehicle (2) is imminent, and
   the means for selectively activating the brake system (4) are arranged to apply at least one brake of the brake system (4) if a rear impact between the second vehicle (11) and the host vehicle (2) is determined imminent.

2. A system according to claim 1, **characterised in that**:

   the means for selectively activating the brake system (4) are arranged to apply anything between zero and full brake force for each wheel independently if a rear impact between the second vehicle (11) and the host vehicle (2) is determined imminent.

3. A system according to any one of claims 1 to 2, **characterised in that** it further comprises means for selectively changing at least one parameter of the steering system (5) of the host vehicle (2) if a rear impact between the second vehicle (11) and the host vehicle (2) is determined imminent and the positive velocity of the host vehicle (2) is below a predetermined threshold.

4. A system according to any one of claims 1 to 3, **characterised in that** it further comprises means (10) for establishing relative motion parameters between an object (12) in front of the host vehicle (2) and the host vehicle (2).

5. A system according to claim 4, **characterised in that** it further comprises:

   means for determining from any determined relative motion parameters if an impact between the host vehicle(2) and the object (12) is imminent as a result of a rear impact between the second vehicle (11) and the host vehicle (2) which has been determined imminent;
   means for selectively executing a manoeuvre for mitigating an impact with the object (12) by performing at least one of a steering counteraction and a braking counteraction, if determined that an impact between the host vehicle(2) and the object (12) is imminent.

6. A system according to any one of the preceding claims, **characterised in that** it further comprises:

   means for detecting the occurrence of a rear impact between the second vehicle (11) and the host vehicle (2);
   means for evaluating the detected rear impact;
   means for selectively performing at least one of a steering counteraction and a braking counteraction based on the evaluation of the detected rear impact.

7. A system according to any one of the preceding claims, **characterised in that** the means (3, 10) for establishing relative motion parameters comprises at least one of a RADAR system, a LIDAR system, an ultra sound sensor system, a camera based system or a system for wireless communication or a positioning system.

8. An automotive vehicle (2) **characterised in that** it comprises a system (1) according to any one of the preceding claims.

9. A method for autonomous rear impact mitigation in a host vehicle (2) having a brake system (4) and a steering system (5), **characterised in that** it comprises the steps of:

establishing relative motion parameters between the host vehicle (2) and a second vehicle (11) behind the host vehicle (2);
selectively activating the brake system (4) of the host vehicle (2), while the host vehicle (2) has a positive velocity, based on the determined relative motion parameters.

**Patentansprüche**

1. System (1) für autonome Heckaufprallabschwächung in einem Fahrzeug (2), welches das System (1) trägt, wobei das Fahrzeug (2) ein Bremssystem (4) und ein Lenksystem (5) besitzt, **dadurch gekennzeichnet, dass** es umfasst:

Mittel zum Erstellen von relativen Bewegungsparametern zwischen dem Trägerfahrzeug (2) und einem zweiten Fahrzeug (11) hinter dem Trägerfahrzeug (2),
Mittel zum gezielten Aktivieren des Bremssystems (4) des Trägerfahrzeugs (2), während das Trägerfahrzeug (2) eine positive Geschwindigkeit hat, basierend auf den bestimmten relativen Bewegungsparametern, und Mittel zum Verwenden der bestimmten relativen Bewegungsparameter zum Feststellen, ob ein Heckaufprall zwischen dem zweiten Fahrzeug (11) und dem Trägerfahrzeug (2) unmittelbar bevorsteht, und die Mittel zum gezielten Aktivieren des Bremssystems (4) ausgebildet sind, um wenigstens eine Bremse des Bremssystems (4) zu betätigen, wenn festgestellt worden ist, dass ein Heckaufprall zwischen dem zweiten Fahrzeug (11) und dem Trägerfahrzeug (2) unmittelbar bevorsteht.

2. System nach Anspruch 1, **dadurch gekennzeichnet, dass** die Mittel zum gezielten Aktivieren des Bremssystems (4) ausgebildet sind, um eine beliebige Bremskraft zwischen Null und der vollen Bremskraft auszuüben, wenn festgestellt worden ist, dass ein Heckaufprall zwischen dem zweiten Fahrzeug (11) und dem Trägerfahrzeug (2) unmittelbar bevorsteht.

3. System nach einem der Ansprüche 1 bis 2, **dadurch gekennzeichnet, dass** es ferner Mittel umfasst, um gezielt wenigstens einen Parameter des Lenksystems (5) des Trägerfahrzeugs zu verändern, wenn festgestellt worden ist, dass ein Heckaufprall (2) zwischen dem zweiten Fahrzeug (11) und dem Trägerfahrzeug (2) unmittelbar bevorsteht, und die positive Geschwindigkeit des Trägerfahrzeugs (2) unter einem bestimmten Schwellwert liegt.

4. System nach einem der Ansprüche 1 bis 3, **dadurch gekennzeichnet, dass** es ferner Mittel (10) umfasst, um relative Bewegungsparameter zwischen einem Objekt (12) vor dem Trägerfahrzeug (2) und dem Trägerfahrzeug (2) zu bestimmen.

5. System nach Anspruch 4, **dadurch gekennzeichnet, dass** es ferner umfasst:

Mittel zum Bestimmen aus einem beliebigen bestimmten relativen Bewegungsparameter, ob ein Heckaufprall zwischen dem Trägerfahrzeug (2) und dem Objekt (12) unmittelbar bevorsteht als Ergebnis eines Heckaufpralls zwischen dem zweiten Fahrzeug (11) und dem Trägerfahrzeug (2), von dem festgestellt worden ist, dass er unmittelbar bevorsteht;
Mittel zum gezielten Durchführen eines Manövers zum Abschwächen eines Aufpralls auf das Objekt (12), indem mindestens eine Gegenlenkhandlung oder eine Gegenbremshandlung durchgeführt wird, wenn festgestellt worden ist, dass ein Aufprall zwischen dem Trägerfahrzeug (2) und dem Objekt (12) unmittelbar bevorsteht.

6. System nach einem der vorstehenden Ansprüche, **dadurch gekennzeichnet, dass** es ferner umfasst:

Mittel zum Erkennen des Auftretens eines Heckaufpralls zwischen dem zweiten Fahrzeug (11) und dem Trägerfahrzeug (2) ;
Mittel zum Beurteilen des erkannten Heckaufpralls;
Mittel zum gezielten Durchführen einer Gegenlenkhandlung oder einer Gegenbremshandlung basierend auf der Beurteilung des erkannten Heckaufpralls.

7. System nach einem der vorstehenden Ansprüche, **dadurch gekennzeichnet, dass** die Mittel (3, 10) zum Erstellen von relativen Bewegungsparametern wenigstens ein RADAR-System, ein LIDAR-System, ein Ultraschallsensor-System, ein kamerabasiertes System, oder ein System zur drahtlosen Kommunikation oder ein Positioniersystem umfassen.

8. Kraftfahrzeug (2), **dadurch gekennzeichnet, dass** es ein System (1) nach einem der vorstehenden Ansprüche umfasst.

9. Verfahren für autonome Heckaufprallabschwächung in einem Fahrzeug (2), welches ein Bremssystem (4) und ein Lenksystem (5) besitzt, **dadurch gekennzeichnet, dass** es die Schritte umfasst:

Erstellen von relativen Bewegungsparametern zwischen dem Trägerfahrzeug (2) und einem zweiten Fahrzeug (11) hinter dem Trägerfahrzeug (2) ;

gezieltes Aktivieren des Bremssystems (4) des Trägerfahrzeugs (2), während das Trägerfahrzeug (2) eine positive Geschwindigkeit hat, basierend auf den bestimmten relativen Bewegungsparametern.

## Revendications

1. Système (1) d'atténuation autonome d'impact arrière dans un véhicule (2) accueillant le système (1), le véhicule (2) présentant un système de freinage (4) et un système de direction (5), **caractérisé en ce qu'**il comprend :

   des moyens d'établissement de paramètres de déplacement relatif entre le véhicule hôte (2) et un second véhicule (11) derrière le véhicule hôte (2) ;

   des moyens d'actionnement sélectif du système de freinage (4) du véhicule hôte (2), pendant que le véhicule hôte (2) présente une vitesse positive, sur la base des paramètres de déplacement relatif déterminés,

   et des moyens d'utilisation des paramètres de déplacement relatif pour déterminer si un impact arrière entre le second véhicule (11) et le véhicule hôte (2) est imminent, et

   les moyens d'actionnement sélectif du système de freinage (4) sont conçus pour appliquer au moins un freinage du système de freinage (4) si un impact arrière entre le second véhicule (11) et le véhicule hôte (2) est déterminé imminent.

2. Système selon la revendication 1, **caractérisé en ce que** :

   les moyens d'actionnement sélectif du système de freinage (4) sont conçus pour appliquer n'importe laquelle entre une force de freinage nulle et totale pour chaque roue indépendamment si un impact arrière entre le second véhicule (11) et le véhicule hôte (2) est déterminé imminent.

3. Système selon l'une quelconque des revendications 1 à 2, **caractérisé en ce qu'**il comprend en outre des moyens de modification sélective d'au moins un paramètre du système de direction (5) du véhicule hôte (2) si un impact arrière entre le second véhicule (11) et le véhicule hôte (2) est déterminé imminent et la vitesse positive du véhicule hôte (2) est inférieure à un seuil prédéterminé.

4. Système selon l'une quelconque des revendications 1 à 3, **caractérisé en ce qu'**il comprend en outre des moyens (10) d'établissement de paramètres de déplacement relatif entre un objet (12) à l'avant du véhicule hôte (2) et le véhicule hôte (2).

5. Système selon la revendication 4, **caractérisé en ce qu'**il comprend en outre :

   des moyens de détermination à partir de n'importe quels paramètres de déplacement relatif déterminés si un impact entre le véhicule hôte (2) et l'objet (12) est imminent en résultat d'un impact arrière entre le second véhicule (11) et le véhicule hôte (2) qui a été déterminé imminent ;

   des moyens d'exécution sélective d'une manoeuvre pour atténuer un impact avec l'objet (12) par l'exécution d'au moins l'une d'une action contraire de direction et d'une action contraire de freinage, s'il est déterminé qu'un impact entre le véhicule hôte (2) et l'objet (12) est imminent.

6. Système selon l'une quelconque des revendications précédentes, **caractérisé en ce qu'**il comprend en outre :

   des moyens de détection de l'occurrence d'un impact arrière entre le second véhicule (11) et le véhicule hôte (2) ;

   des moyens d'évaluation de l'impact arrière détecté ;

   des moyens d'exécution sélective d'au moins l'une d'entre une action contraire de direction et une action contraire de freinage sur la base de l'évaluation de l'impact arrière détecté.

7. Système selon l'une quelconque des revendications précédentes, **caractérisé en ce que** les moyens (3, 10) d'établissement de paramètres de déplacement relatif comprennent au moins l'un d'entre un système RADAR, un système LIDAR, un système de capteur à ultrasons, un système à base de caméra ou un système de communication sans fil ou un système de positionnement.

8. Véhicule automobile (2) **caractérisé en ce qu'**il comprend un système (1) selon l'une quelconque des revendications précédentes.

9. Procédé d'atténuation autonome d'impact arrière dans un véhicule hôte (2) présentant un système de freinage (4) et un système de direction (5), **caractérisé en ce qu'**il comprend les étapes de :

   l'établissement de paramètres de déplacement relatif entre le véhicule hôte (2) et un second véhicule (11) derrière le véhicule hôte (2) ;

   l'actionnement sélectif du système de freinage (4) du véhicule hôte (2) pendant que le véhicule

**EP 1 852 323 B1**

hôte (2) présente une vitesse positive, sur la base des paramètres de déplacement relatif déterminés.

FIG. 1

FIG. 2

FIG. 3

FIG. 4

$\mathbf{p} = (p_x\ p_y)$

FIG. 5

$$\mathbf{p} = (p_x \; p_y)$$

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6364433 B